# EUROPÄISCHE PATENTSCHRIFT

(11) **EP 1 782 669 B1**
(45) Veröffentlichungstag und Bekanntmachung des Hinweises auf die Patenterteilung: **02.04.2008**
(21) Anmeldenummer: 06021482.2
(22) Anmeldetag: 13.10.2006
(51) Int. Cl.: A01B 73/04, A01C 7/20

(54) **Pneumatische Sämaschine**
Pneumatic seeder
Semoir pneumatique

(30) Priorität: 03.11.2005 DE 102005052473; 15.02.2006 DE 102006006984
(43) Veröffentlichungstag der Anmeldung: 09.05.2007
(73) Patentinhaber: Amazonen-Werke H. Dreyer GmbH & Co. KG, 49205 Hasbergen (DE)
(72) Erfinder: Pokriefke, Michael, 27798 Hude (DE); Hoffmann, Karl-Peter, 27798 Hude (DE)

(56) Entgegenhaltungen:
- EP-A1- 0 843 957
- US-A- 5 687 798
- US-B1- 6 622 646

## Beschreibung

Die Erfindung betrifft eine pneumatische Sämaschine gemäß des Oberbegriffes des Patentanspruches 1.

Eine derartige Sämaschine ist durch das DE 92 14 242.7 U1 bekannt. Diese Sämaschine weist einen Mittelrahmen auf, an dessen Außenseite jeweils ein Seitenrahmen mittels eines in eine Fahrtrichtung verlaufende Gelenkachse aufweisenden Gelenkes ein- und ausschwenkbar angeordnet ist. An dem Mittelrahmen und den Seitenrahmen sind Bodenbearbeitungswerkzeuge, Säschare und/oder Walzenelemente angeordnet. Zwischen dem Mittelrahmen und dem jeweiligen Seitenrahmen sind Hydraulikzylinder zum ein- und ausschwenken der Seitenrahmen gegenüber dem Mittelrahmen angeordnet, um die Seitenrahmen in eine,Transportstellung einzuklappen und in eine Arbeitsstellung auszuklappen. Mittels der Hydraulikzylinder sind die Seitenrahmen gegen den Boden zu drücken und in der vorgesehenen Stellung zu fixieren.

Des weiteren weisen derartige Sämaschinen häufig ein hydraulisch angetriebenes Gebläse auf, welches das Saatgut, welches über einen Dosierer aus dem Vorratsbehälter in die Förderleitung eindosiert wird, über einen Verteiler und Verteilerschläuche zu den Säscharen fördert.

Das Problem bei dieser bekannten Sämaschine besteht darin, dass die den Hydraulikzylindern, zugeordneten Hydraulikventile bauartbedingt einen leichten Leckverlust aufweisen, so dass der auf die Hydraulikzylinder gegebene Druck, wenn die Hydraulikzylinder die Seitenrahmen gegen den Boden drücken, nachlässt. Um den auf die Seitenrahmen einwirkenden und von den Hydraulikzylindern erzeugten Druck in gewünschter Weise aufrecht zu erhalten, muss von Zeit zu Zeit von Hand das Steuerventil betätigt werden, um den durch den Leckverlust entstehenden Druckverlust wieder auszugleichen.

Der Erfindung liegt die Aufgabe zugrunde, in einfacher Weise dafür zu sorgen, dass trotz Leckverluste in dem Steuerventil, der gewünschte und/oder eingestellte Druck in den Hydraulikzylindern, die zwischen den Seiterahmen und dem Mittelrahmen angeordnet sind, aufrecht erhalten bleibt.

Diese Aufgabe wird erfindungsgemäß durch das kennzeichnende Merkmal des Patentanspruches 1 gelöst. Infolge dieser Maßnahmen wird durch den stetig anstehenden Hydraulikölstrom, der den das Gebläse antreibenden Ölmotor, über eine Zweigleitung die zu den Hydraulikzylinder führenden Leitungen mit Druck beaufschlagt. Hierdurch wird der Leckverlust ausgeglichen. Damit die Seitenrahmen ein- und ausgeklappt werden können, ist vorgesehen, dass in der Zweigleitung ein Abschalt- und/oder Absperrventil angeordnet ist. Über dieses Abschalt- und/oder Absperrventil wird die Zweigleitung von den bzw. zu den den Seitenrahmen zugeordneten Hydraulikzylindern führenden Seitenleitungen abgesperrt.

In einer weiteren Ausführung ist vorgesehen, dass in der Zweigleitung ein Druckregelventil und ein Druckbegrenzungsventil angeordnet sind. Infolge dieser Maßnahme wird über das Druckregelventil bzw. Druckbegrenzungsventil der auf die Hydraulikzylinder, die den Seitenrahmen zugeordnet sind, einwirkender Druck eingestellt. Hierdurch kann der auf die Seitenrahmen gegen den Boden wirkende und von den Hydraulikzylindern erzeugte Druck in gewünschter Weise eingestellt und konstant gehalten werden.

Eine weitere Beaufschlagung der Hydraulikzylinder in vereinfachter Form lässt durch das kennzeichnende Merkmal des Patentanspruches 4 erreichen. Infolge dieser Maßnahmen werden die Hydraulikzylinder über das vorzugsweise einstellbare Drosselventil mit Druck beaufschlagt.

Weitere Einzelheiten der Erfindung sind der Beispielsbeschreibung und den Zeichnungen zu entnehmen. Hierbei zeigen
- Fig. 1: den Mittelrahmen mit den daran angeordneten Seitenrahmen der Sämaschine in der Ansicht von hinten und in Arbeitsstellung,
- Fig. 2: den Mittelrahmen und den Seitenrahmen der Sämaschine in der Ansicht von hinten, in Prinzipdarstellung und in Transportstellung,
- Fig. 3: einen Hydraulikschaltplan,
- Fig. 4: einen weiteren Hydraulikschaltplan,
- Fig. 5: einen weiteren Hydraulikschaltplan,
- Fig. 6: einen weiteren Hydraulikschaltplan und

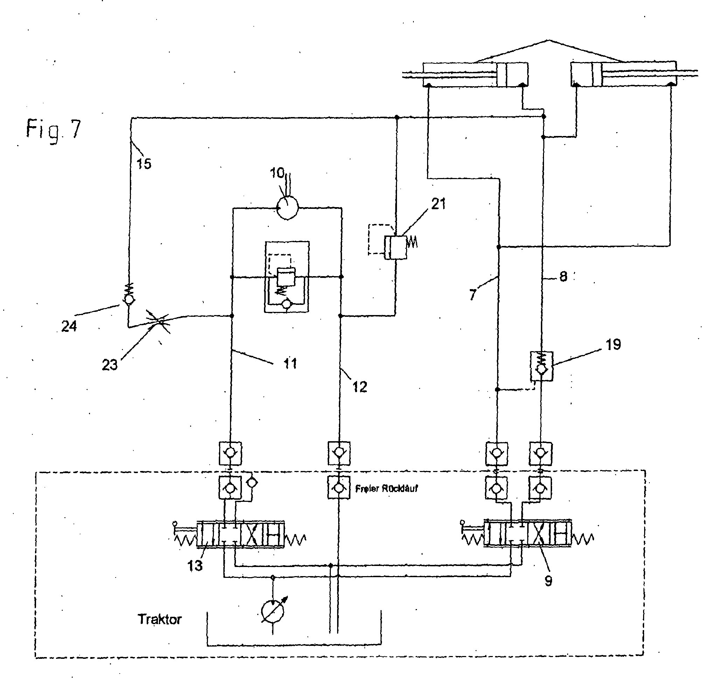

- Fig. 7: einen Hydraulikschaltplan.

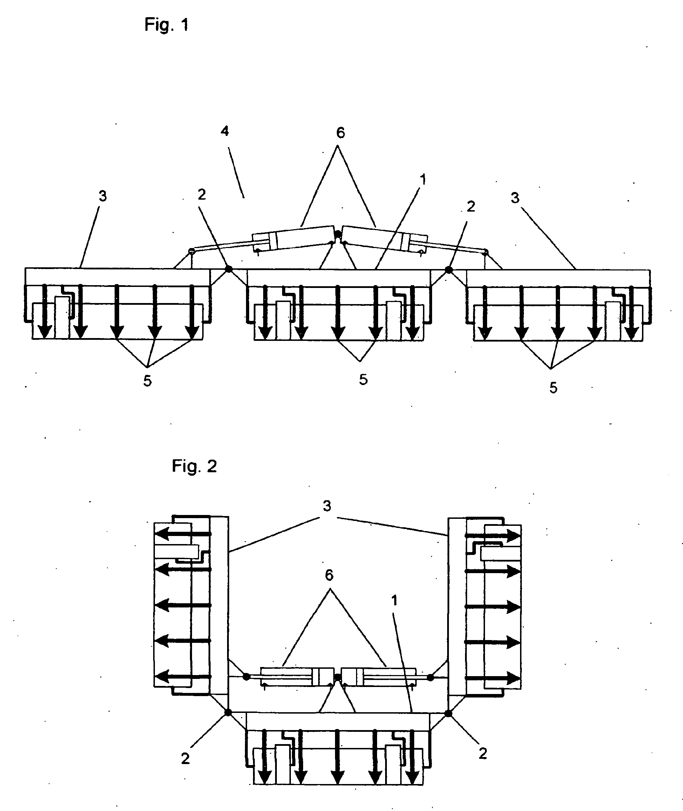

In den Fig. 1 und 2 ist der, der aus dem Mittelrahmen 1, den an dem Mittelrahmen 1 mittels Gelenken 2, deren Gelenkachsen in Fahrtrichtung weisen, angelenkten Seitenrahmen 3 bestehende Scharrahmen 4 dargestellt. Dieser Scharrahmen 4 ist in bekannter und daher nicht näher dargestellter Weise mittels Verbindungselementen an dem Rahmen einer Sämaschine die einen Vorratsbehälter, ein mittels Hydraulikmotor angetriebenes Gebläse, Verteilorgane und zu den Säscharen 5, die an dem Scharrahmen angeordnet sind, führenden Förderleitungen angeordnet. Die Förderleitungen werden durch das hydraulisch angetriebene Gebläse mit Druckluft beaufschlagt.

Zwischen dem Mittelrahmen 1 und dem jeweiligen Seitenrahmen 3 ist jeweils ein doppeltwirkender Hydraulikzylinder 6 angeschlossen, um die als Seitensektionen ausgebildeten Seitenrahmen 3 in der ausgeschwenkten Position gemäß Fig. 1 gegen den Boden zu drücken und in die in Fig. 2 dargestellte Transportstellung einzuklappen sowie aus der in Fig. 2 dargestellten Transportstellung in die in Fig. 1 dargestellte Arbeitsstellung auszuklappen. Die zu den doppeltwirkenden Hydraulikzylinder 6 führenden Hydraulikleitungen 7 und 8 sind über ein Steuerventil 9 des Schleppers an die Hydraulikanlage des die Sämaschine ziehenden oder tragenden Schleppers angeschlossen. Die Hydraulikmotor 10, die das Gebläse antreibt, ist ebenfalls über zwei Hydraulikleitungen 11, 12 an die Hydraulikanlage des Schleppers angeschlossen, wobei die druckseitig beaufschlagte Leitung 11 an ein Steuerventil 13 des Schleppers angeschlossen ist, während die Rücklaufleitung 12 über einen sog. freien Rücklauf 14 an die Schlepperhydraulikanlage angeschlossen ist. An der Druckleitung 11, die von dem Steuergerät 13 der Schlepperhydraulikanlage zu dem Hydraulikmotor 10, welches das Gebläse antreibt, ist eine Zweigleitung 15 angeschlossen, die mit den Hydraulikleitungen 8 der Hydraulikzylinder 6, die zwischen dem Mittelrahmen 1 und den Seitenrahmen 3 des Scharrahmens 4 angeordnet sind, welche die Hydraulikzylinder 6 ausfährt, um die Seitenrahmen auszuschwenken und gegen den Boden zu drücken, verbunden ist. In der Zweigleitung 15 ist ein 2/1-Wegeventil 16, welches als Abschalt- oder Absperrventil ausgebildet ist, angeordnet. Des weiteren ist zwischen der von dem Hydraulikmotor 10 zu dem freien Rücklauf 14 führenden Hydraulikleitung 12 und den Hydraulikleitungen 7 der Hydraulikzylinder 6, die zwischen dem Seitenrahmen 3 und dem Mittelrahmen 1 angeordnet sind, welche an den Hydraulikzylindern 6 auf der Seite angeschlossen sind, die die Hydraulikzylinder 6 einfahren und somit die Seitenrahmen 3 einklappen, eine Leitung 17 angeordnet. Auch in dieser Leitung 17 ist ein als 2/1-Wegeventil 18 ausgebildet als Abschalt- und Absperrventil angeordnet.

Die Funktionsweise dieser Anordnung ist folgende:

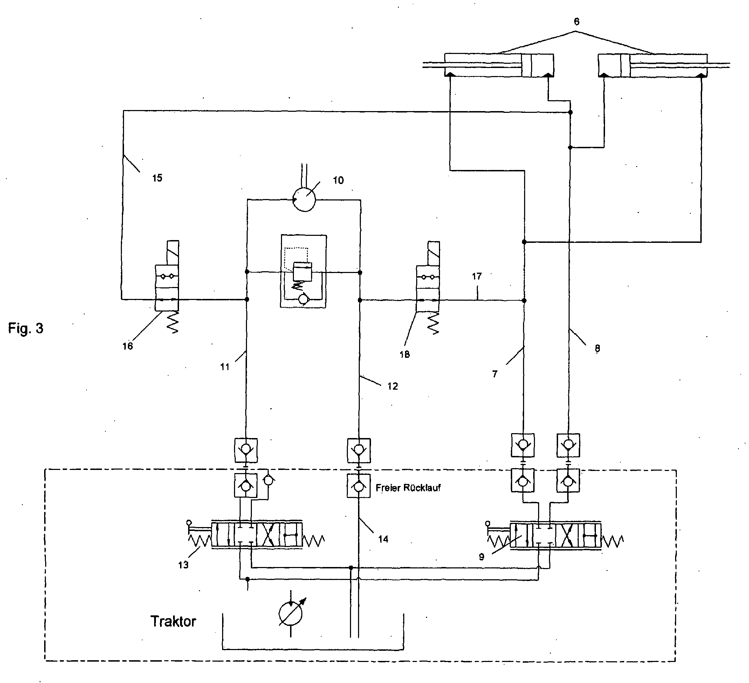

Über die von der Schlepperhydraulikanlage zu den Hydraulikmotor 10 führende Leitung 11 wird während des Betriebes der Hydraulikmotor 10 mit Druck beaufschlagt, so dass das Gebläse angetrieben wird. Gleichzeitig werden, wenn das Absperrventil sich in der in Fig. 3 dargestellten Position befindet, über die Zweigleitung 15 die Hydraulikzylinder 6 mit Druck beaufschlagt, so dass die Seitensektionen 3 gegen den Boden gedrückt werden. Somit ist die an den das Gebläse antreibenden Hydraulikmotor 10 angeschlossene Hydraulikleitung 11 mit den zu den doppeltwirkenden Hydraulikzylindern 6 führenden Leitungen 8, über die die Hydraulikzylinder 6 zum Drücken der als Seitensektion ausgebildeten Seitenrahmen 3 gegen den Boden beaufschlagt werden, über die Zweigleitung 15 verbunden. Durch den ständig auf der Zweigleitung 15 somit auch auf den Leitungen 8 anstehenden Druck werden die Hydraulikzylinder 6 mit Druck beaufschlagt und die Seitensektionen 3 ständig gegen den Boden gedrückt. Falls Bodenunebenheiten es erforderlich machen, dass die Seitensektionen 3 auf der Außenseite leicht angehoben werden müssen, das heißt das die Hydraulikzylinder 6 zusammengedrückt werden, fließt das aus den Hydraulikzylindern 6 gedrückte Öl über die Leitungen 7 und die zwischen der Leitung 7 und der Rücklaufleitung 12 angeordneten Zweigleitung in den freien Rücklauf 14 zurück.

Wenn die Seitenrahmen 3 eingeklappt werden sollen, werden die Abschalt- und Absperrventile 16.und 18 umgeschaltet, so dass die Zweigleitungen 15 und 17 gesperrt werden. Anschließend wird über das Steuerventil 9 die Leitung 7 mit Druck beaufschlagt, so dass die Hydraulikzylinder 6 einfahren und die Seitenrahmen 3 einklappen.

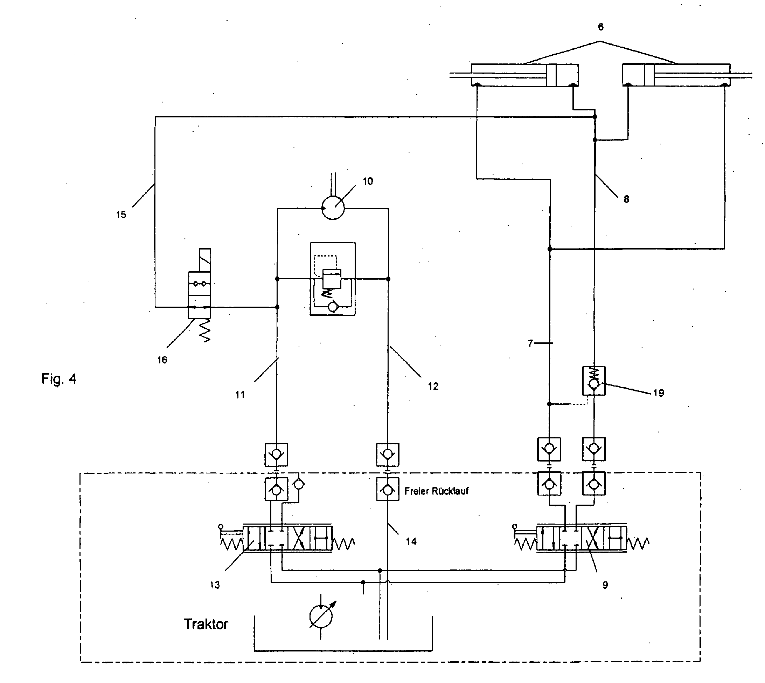

Der Hydraulikschaltplan gemäß Fig. 4 unterscheidet sich von dem Hydraulikschaltplan gemäß Fig. 3 dadurch, dass anstelle der Zweigleitung 17 zwischen den Leitungen 7 und 12 in der Leitung 8 ein über die Leitung 7 entsperrbares Rückschlagventil 19 angeordnet ist. Während des Betriebes muss das schlepperseitige Steuerventil 9 in die sog. Schwimmstellung 9' gebracht werden, damit beim Zusammendrücken der Hydraulikzylinder 6 auf unebenen Bodenoberfläche Öl über die Leitung 7 in die Schlepperhydraulikanlage zurückströmen kann.

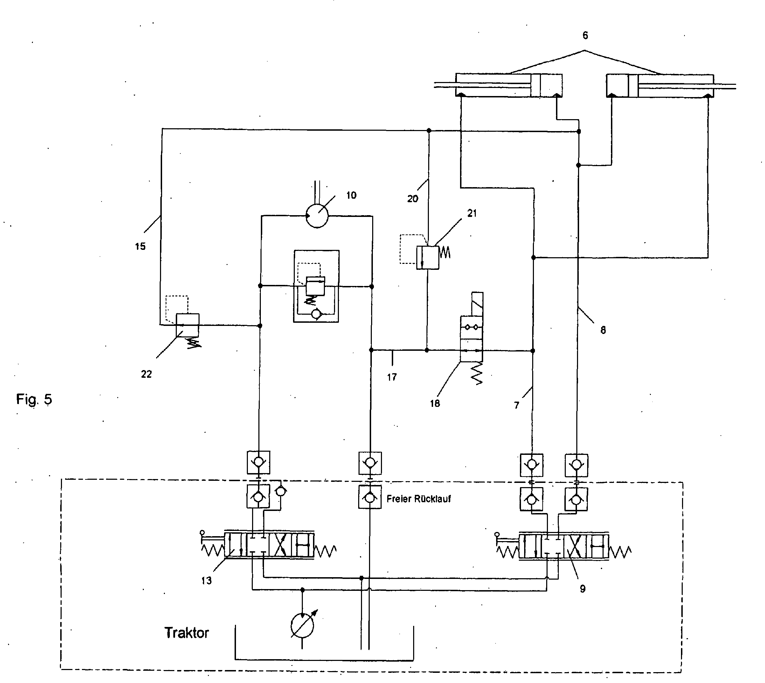

Der Hydraulikschaltplan gemäß Fig. 5 unterscheidet sich von dem Hydraulikschaltplan gemäß Fig. 3 dadurch, dass zwischen den Zweigleitungen 15 und 17 eine weitere Leitung 20 angeordnet ist. In dieser Leitung 20 ist ein Druckbegrenzungsventil 21 angeordnet. Des weiteren ist anstelle des Wegeventils 16 in der Zweigleitung 15 das Druckregelventil 22 angeordnet. Über das Druckregelventil 22 wird der Druck eingestellt, über den die Hydraulikzylinder 6 über die Zweigleitung 15 und die Leitung 8 während des Gebläseantriebs über den Hydraulikmotor 10 mit Druck beaufschlagt werden. Über das Druckbegrenzungsventil 21 wird der max. mögliche Druck für die Hydraulikzylinder 6 eingestellt.

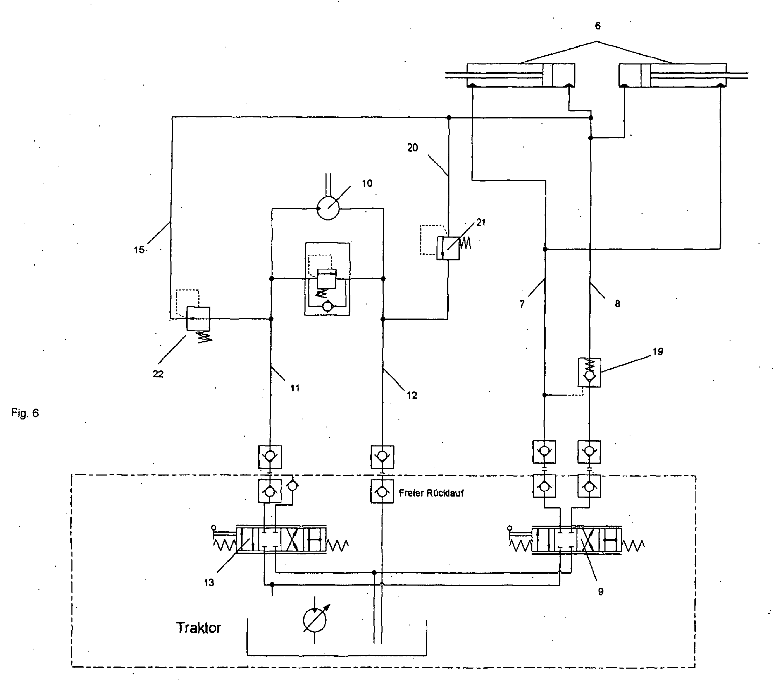

Die Hydraulikschaltung gemäß Fig. 6 unterscheidet sich von dem Hydraulikschaltplan gemäß Fig. 5 dadurch, dass die Zweigleitungen 17 und das Wegeventil 18 nicht vorhanden sind. Hierfür ist in der Leitung 8 das über die Leitung 7 entsperrbare Rückschlagventil 19 angeordnet.

Der in der Fig. 6 dargestellte Hydraulikschaltplan unterscheidet sich von dem Hydraulikschaltplan gemäß Fig. 6 dadurch, dass in der von der Leitung 11 abzeigenden Zweigleitung 15 kein Druckbegrenzungsventil sondern ein Drosselventil 23, welches vorzugsweise einstellbar ist, angeordnet ist. Des Weiteren kann in der Zweigleitung 15 noch das Rückschlagventil 24 angeordnet sein. Durch das Rückschlagventil 24 wird verhindert, wenn die Hydraulikzylinder 6 eingefahren werden, dass dann über die Leitungen 15 kein Öl über die Leitung 11 zu dem Hydraulikmotor 10 gedrückt wird.

Es ist jedoch auch möglich, kein Rückschlagventil 24 in der Leitung 15 vorzusehen. In diesem Falle wird ein geringfügiger Ölstrom durch das Drosselventil 23 in die Leitung 11 gedrückt, so dass der Motor 10 geringfügig angetrieben wird. Dies ist jedoch in vielen Fällen unproblematisch, wenn von dem Hydraulikmotor 10 ein Gebläse angetrieben wird, welches dann mit geringer Drehzahl umläuft.

## Patentansprüche

1. Pneumatische Sämaschine mit einem Rahmen, von einem hydraulisch angetriebenen Gebläse mit Druckluft beaufschlagten Förderleitungen, am Rahmen mittels doppeltwirkender Hydraulikzylinder ein- und ausschwenkbar angeordneten Seitensektionen, die mittels der zwischen Rahmen und den Seitensektionen angeordneten Hydraulikzylinder in der ausgeschwenkten Position gegen den Boden gedrückt werden, wobei das Gebläse über einen an eine Hydraulikdruckleitung angeschlossenen Hydraulikmotor antreibbar ist, **dadurch gekennzeichnet, dass** die an den das Gebläse antreibende Hydraulikmotor (10) angeschlossene Hydraulikdruckleitung (11) mit den zu den doppeltwirkenden Hydraulikzylinder (6) führenden Leitungen (8), über die Hydraulikzylinder (6) zum Drücken der Seitensektionen (3) zum Boden beaufschlagt werden, über eine Zweigleitung (15) verbunden ist.

2. Sämaschine nach Anspruch 1, **dadurch gekennzeichnet, dass** in der Zweigleitung (15) ein Abschalt- und/oder Absperrventil (16) angeordnet ist.

3. Sämaschine nach Anspruch 1, **dadurch gekennzeichnet, dass** in der Zweigleitung (15) ein Druckregelventil (22) und ein Druckbegrenzungsventil (21) angeordnet sind.

4. Sämaschine nach Anspruch 1, **dadurch gekennzeichnet, dass** in der Zweigleitung (15) ein Druckregelventil (22) und ein Drosselventil (23) angeordnet sind.

5. Sämaschine nach Anspruch 4, **dadurch gekennzeichnet, dass** in der Zweigleitung (15) weiterhin ein Rückschlagventil (24) angeordnet ist, welches den Rückfluss der Flüssigkeit von dem Hydraulikzylinder (6) in die Hydraulikleitung (11) verhindert

## Claims

1. Pneumatic seeder having a frame, feed lines which have compressed air acting thereupon from an hydraulically driven blower, side sections which are disposed on the frame so as to be inwardly and outwardly pivotable by means of double-acting hydraulic cylinders, and which are urged towards the ground by means of the hydraulic cylinders, disposed between the frame and the side sections, in the outwardly pivoted position, the blower being drivable via an hydraulic motor, which communicates with an hydraulic pressure line, **characterised in that** the hydraulic pressure line (11), which communicates with the hydraulic motor (10) driving the blower, is connected, via a branch line (15), to the lines (8) which lead to the double-acting hydraulic cylinders (6), and via which hydraulic cylinders (6) are acted-upon to urge the side sections (3) to the ground.

2. Seeder according to claim 1, **characterised in that** a switch-off and/or shut-off valve (16) is disposed in the branch line (15).

3. Seeder according to claim 1, **characterised in that** a pressure regulating valve (22) and a pressure limiting valve (21) are disposed in the branch line (15).

4. Seeder according to claim 1, **characterised in that** a pressure regulating valve (22) and a throttle valve (23) are disposed in the branch line (15).

5. Seeder according to claim 4, **characterised in that**, in the branch line (15), moreover, a non-return valve (24) is disposed, which prevents the fluid from flowing from the hydraulic cylinder (6) back into the hydraulic line (11).

## Revendications

1. Semoir pneumatique comportant un châssis, des conduites de transfert recevant de l'air comprimé fourni par une machine soufflante à entraînement hydraulique, des sections latérales susceptibles d'être repliées et dépliées par rapport au châssis à l'aide de vérins hydrauliques à double effet, ces sections étant poussées contre le sol en position déployée par des vérins hydrauliques installés entre le châssis et les sections latérales,
la machine soufflante étant entraînée par un moteur hydraulique relié à une conduite de liquide hydraulique sous pression,
**caractérisé en ce que**
la conduite hydraulique (11) reliée par une conduite de dérivation (15) au moteur hydraulique (10) entraînant la machine soufflante est reliée aux conduites (8) aboutissant aux vérins hydrauliques (6) à double effet, pour agir sur les vérins hydrauliques (6) et pousser les sections latérales (3) vers le sol.

2. Semoir selon la revendication 1,
**caractérisé en ce que**
la conduite de dérivation (15) comporte une vanne de coupure et/ou d'arrêt (16).

3. Semoir selon la revendication 1,
**caractérisé par** une soupape de régulation de pression (22) dans la conduite de dérivation (15) ainsi qu'une vanne de limitation de pression (21).

4. Semoir selon la revendication 1,
**caractérisé par**
une vanne de régulation de pression (22) dans la conduite de dérivation (15) ainsi qu'une vanne d'étranglement (23).

5. Semoir selon la revendication 4,
**caractérisé en ce que**
la conduite de dérivation (15) comporte en outre un clapet anti-retour (24) qui interdit le retour du liquide du vérin hydraulique (6) vers la conduite hydraulique (11).
